# EUROPEAN PATENT APPLICATION

(11) **EP 2 503 180 A2**
(43) Date of publication of application: **26.09.2012**
(21) Application number: 12159352.9
(22) Date of filing: 14.03.2012
(51) Int. Cl.: F16F 9/14

(54) **Rotary damper**

(30) Priority: 22.03.2011 JP 2011062320
(71) Applicant: Kayaba Industry Co., Ltd., Tokyo 105-6111 (JP)
(72) Inventor: Yonezawa, Kazuhiko, Tokyo, 105-6111 (JP); Hirose, Mitsuhiko, Tokyo, 105-6111 (JP); Sakuta, Atsushi, Tokyo, 105-6111 (JP)
(74) Representative: Grünecker, Kinkeldey, Stockmair & Schwanhäusser

(57) **Abstract**

In a rotary damper (D) including a shaft (1), a pair of side panels (2, 3) which pivotally support the shaft (1) while allowing the shaft (1) to rotate in the circumferential direction, a case (4) which is held between the side panels (2, 3) and forms a pressure chamber (R) therein, a vane (5) which is provided in the shaft (1), has a distal end in sliding contact with the inner periphery of the case (4) and divides the pressure chamber (R) into a first chamber (R1) and a second chamber (R2), and a side plate (6, 7) which is interposed between the vane (5) and at least one of the side panels (2, 3) and are more excellent in abrasion resistance than the side panels (2, 3).

## Description

### FIELD OF THE INVENTION

The present invention relates to improvement of a rotary damper.

### BACKGROUND OF THE INVENTION

A prior-art rotary damper includes a shaft, a pair of side panels which pivotally support the shaft while allowing it to rotate in the circumferential direction, a case which is held by these side panels and forms a pressure chamber inside, and a vane which is provided on the shaft and divides the pressure chamber into a first chamber and a second chamber.

The rotary damper operates such that, when a rotating force is applied to the shaft from the outside, the vane moves in the pressure chamber with the rotation of the shaft and contracts the first chamber and enlarges the second chamber, for example. A damping force to suppress the rotation of the shaft is exerted by giving resistance to a flow of oil moving from the contracting first chamber to the enlarging second chamber (See JP8-177928A).

In the rotary damper, the first chamber communicates with the second chamber via a gap between the vane and the case as well as a gap between the vane and the side panels, and the damping force is exerted by using this gap as a throttle valve. It is necessary to control the gap dimension with accuracy in order to exert a desired damping force. Thus, a rotary damper was developed in which a seal is provided at a distal end of the vane and opposing ends of the side panels, and the first chamber and the second chamber are made to communicate with each other via a separately provided damping valve so as to exert the desired damping force (JP2006-316863A).

### SUMMARY OF THE INVENTION

If such a rotary damper is to be incorporated in a suspension of a vehicle for use, the rotary damper is incorporated in the suspension by fixing the case of the rotary damper to a car body and by connecting a shaft of the rotary damper to a suspension arm which is mounted to the car body capable of swinging and holds a wheel. Specifically, the shaft and the suspension arm are connected by matching the rotating direction of the shaft with the swing direction of the suspension arm.

Particularly, a suspension of a four-wheel vehicle has a structure in which a flexible bush is incorporated in a movable part with the purpose of absorbing vibration and the like and if a force in a direction other than the vertical direction is applied to the wheel, the suspension arm can be moved in a direction other than the swing direction to some degree by deflection of the bush. Thus, if the rotary damper is incorporated in the suspension, the suspension arm operates also in a direction other than the swing direction. And thus, an axial force other than the shaft rotating direction acts on the shaft of the rotary damper from the suspension arm.

If the axial force acts on the shaft as above, the vane and the side panels of the rotary damper rub against each other and wear, which roughens the vane opposing surfaces of the side panels. Then, the seal provided on the vane is rubbed with the rough surface, abrasion of the seal progresses, and the first chamber and the second chamber can no longer be sealed closely. Thus, it is likely that an intended damping force cannot be exerted.

The shaft integral with the vane is formed of a material with high tension strength due to its function of transmitting a torque. On the other hand, it is only necessary that the side panels are formed of a material with low tension strength. Therefore, a material with a low atomic density is used for the side panels in the rotary damper to reduce weight. If a material with high hardness is used for the side panel so as to be able to withstand abrasion, deterioration of the seal can be suppressed. However, then, weight reduction of the rotary damper cannot be realized.

As described above, if priority is given to suppression of seal deterioration, weight reduction cannot be realized, while if the weight reduction takes priority, suppression of seal deterioration becomes difficult in the prior-art rotary damper. Thus, the suppression of seal deterioration and the weight reduction of the rotary damper are in a trade-off relationship.

The present invention was made in order to improve the above-described problem and has an object to provide a rotary damper which can realize both weight reduction and suppression of seal deterioration.

A rotary damper in one aspect of the present invention has a shaft, a pair of side panels which pivotally support the shaft while allowing it to rotate in the circumferential direction, a case which is provided between the pair of side panels and forms a pressure chamber inside, a vane which is provided on the shaft, has a distal end in sliding contact with the inner periphery of the case and divides the pressure chamber into a first chamber and a second chamber, and a side plate which is interposed between the vane and at least one of the side panels and is more excellent abrasion resistance than the side panels.

According to this aspect, the weight reduction and the suppression of seal deterioration can be both realized.

### BRIEF DESCRIPTION OF THE DRAWINGS

Fig. 1 is a longitudinal sectional view of a rotary damper in an embodiment.

Fig. 2 is a cross sectional view of the rotary damper in the embodiment.

### DESCRIPTION OF THE PREFERRED EMBODIMENT

The present invention will be described below by referring to an illustrated embodiment.

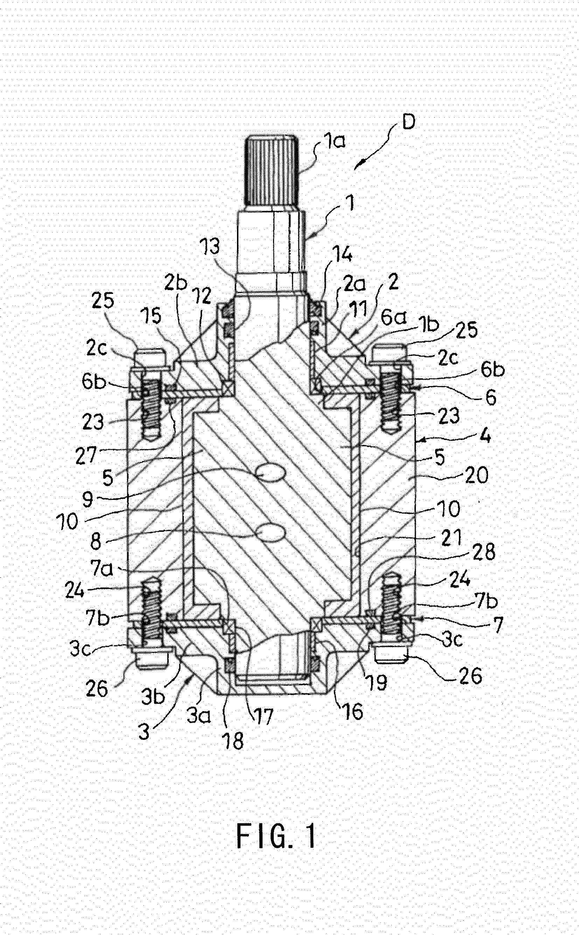

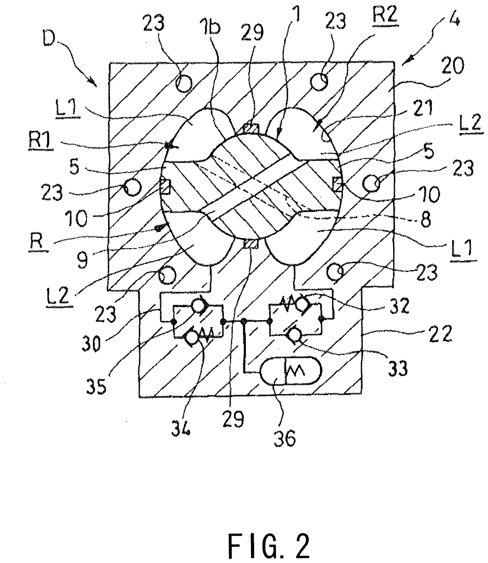

As illustrated in Figs. 1 and 2, a rotary damper D in this embodiment has a shaft 1, a pair of side panels 2 and 3 which pivotally support the shaft 1 while allowing it to rotate in the circumferential direction, a case 4 which is provided between the side panels 2 and 3 and forms a pressure chamber R inside, a vane 5 which is provided on the shaft 1, has a distal end in sliding contact with the inner periphery of the case 4 and divides the pressure chamber R into a first chamber R1 and a second chamber R2, and side plates 6 and 7 interposed between the vane 5 and each of the side panels 2 and 3. The rotary damper D exerts a damping force for suppressing rotation of the shaft 1 when the shaft 1 is rotated in the circumferential direction with respect to the case 4.

Each part of the rotary damper D will be described below in detail. The shaft 1 includes a serration 1a which is provided at the distal end and enables connection with a joint or the like, not shown, an enlarged diameter part 1b which is provided between the serration 1 a and the other distal end and has a diameter larger than the other parts, a pair of vanes 5 which project from the outer periphery of the enlarged diameter part 1b and are provided with a phase of 180 degrees in the circumferential direction, and two communication holes 8 and 9 which are opened in the side part of the enlarged diameter part 1b between the pair of vanes 5 and communicate with the side part of the enlarged diameter part 1b between the vanes 5 on the opposite side and are shifted from each other in the axial direction so that they do not cross each other. In the above, the serration 1a is provided for connection with the joint or the like, not shown, but a method of connection is not limited by that.

The vane 5 has a surface whose cross sectional face is in an arc at the distal end, and a U-shaped seal 10 is attached from the upper end and the distal end in Fig. 1 on the side panel 2 side to the lower end in Fig. 1 on the side panel 3 side. The seal 10 is in sliding contact with the case 4 and the side plates 6 and 7 and seals between the vane 5, the case 4 and the side plates 6 and 7.

The side panel 2 includes a cylindrical shaft holding part 2a into which the upper end in Fig. 1 of the shaft 1 is inserted, a flange-shaped cap part 2b provided on the outer periphery of the lower end in Fig. 1 of the shaft holding part 2a, and a plurality of bolt insertion holes 2c provided with intervals on the same circumference of the cap part 2b in this embodiment. Moreover, a cylindrical bearing 11 in sliding contact with the upper side in Fig. 1 of the shaft 1 is attached to the inner periphery of the shaft holding part 2a, and a ring-shaped seal member 12 is attached to the case 4 side also on the inner periphery of the shaft holding part 2a and in the lower side in Fig. 1 than the bearing 11. Furthermore, a ring-shaped U-packing 13 and a ring-shaped dust seal 14 in sliding contact with the outer periphery of the shaft 1 are attached to the inner periphery of the shaft holding part 2a and on the side opposite to the case 4 in the upper side in Fig. 1 than the bearing 11. The seal member 12 is in close contact with the upper end face in Fig. 1 of the enlarged diameter part 1b of the shaft 1 and seals among the shaft 1, the vane 5, the side panel 2, and the side plate 6 in close contact with them. The U-packing 13 seals between the shaft 1 and the side panel 2 in close contact with the outer periphery of the shaft 1. The dust seal 14 provided on the outermost side on the uppermost side in Fig. 1 prevents dusts from entering between the shaft 1 and the side panel 2 from the outside. Moreover, an O-ring 15 is attached on the case 4 side of the cap part 2b, and the O-ring 15 seals between the side panel 2 and the side plate 6.

The side panel 3 in this embodiment includes a shaft holding part 3a which has a bottomed cylindrical shape and into which the lower end in Fig. 1 of the shaft 1 is inserted, a flange-shaped cap part 3b provided on the outer periphery of the upper end in Fig. 1 of the shaft holding part 3a, and a plurality of bolt insertion holes 3c provided on the same periphery of the cap part 3b with intervals. Moreover, a cylindrical bearing 16 in sliding contact with the outer periphery of the lower end in Fig. 1 of the shaft 1 is attached to the inner periphery of the shaft holding part 3a, and a ring-shaped seal member 17 is attached to the case 4 side also on the inner periphery of the shaft holding part 3a and in the upper side in Fig. 1 than a bearing 16. Moreover, a ring-shaped U-packing 18 in sliding contact with the outer periphery of the shaft 1 is attached on the inner periphery of the shaft holding part 3a and on the side opposite to the case 4 in the lower side in Fig. 1 than the bearing 16. The seal member 17 is in close contact with the lower end face in Fig. 1 of the enlarged diameter part 1b of the shaft 1 similarly to the seal member 12 and seals among the shaft 1, the vane 5, the side panel 3, and the side plate 7 in close contact with them. The U-packing 18 is in close contact with the outer periphery of the shaft 1 and seals between the shaft 1 and the side panel 3. Since the side panel 3 has a closed bottom part in the shaft holding part 3a, a dust seal is not provided, but a dust seal can be provided if the bottom part of the shaft holding part 3a is not closed and the lower end of the shaft 1 protrudes outward. Moreover, an O-ring 19 is attached to the case 4 side of the cap part 3b, and the O-ring 19 seals between the side panel 3 and the side plate 7.

The side panels 2 and 3 are formed of a light-weighted material such as aluminum, for example, and reduce the entire weight of the rotary damper D.

Each of the side plates 6 and 7 has a disk shape thinner than each of the side panels 2 and 3 and includes insertion holes 6a and 7a which allow insertion of the shaft 1 through the center and a plurality of bolt insertion holes 6b and 7b provided at positions matching each of the bolt insertion holes 2c and 3c of the side panels 2 and 3. Moreover, the side plates 6 and 7 are more excellent in abrasion resistance than the side panels 2 and 3. The side plates 6 and 7 can be formed of a material having hardness at least higher than the side panels 2 and 3 and equal to the vane 5, and the surface (sliding surface) of each of the side plates 6 and 7 in contact with the vane 5 may be plated or have a diamond-like carbon coat formed thereon or the surface may be subjected to gas nitrocarburizing treatment, heat treatment or silicon addition treatment so as to improve abrasion resistance of the surface. That is, the side plates 6 and 7 may be formed of a material having hardness higher than the material forming the side panels 2 and 3 and excellent in abrasion resistance and surface treatment may be used so as to improve hardness in the sliding surfaces of the side plates 6 and 7 and to realize high abrasion resistance.

The case 4 includes a main body 20 provided with a hollow part 21 which forms the pressure chamber R, a valve block 22 provided on the side part of the main body 20, a plurality of screw holes 23 provided at positions matching each of the bolt insertion holes 2c of the side panel 2 on the upper end in Fig. 1 of the main body 20, and a plurality of screw holes 24 provided at positions matching each of the bolt insertion holes 3c of the side panel 3 on the lower end in Fig. 1 of the main body 20.

The side plate 6 and the side panel 2 are stacked in order on the upper side in Fig. 1 of the case 4 and they are integrated by screwing a bolt 25 inserted through the bolt insertion holes 2c and 6b to the screw holes 23. Moreover, the side plate 7 and the side panel 3 are stacked in order on the lower side in Fig. 1 of the case 4 and they are integrated by screwing a bolt 26 inserted through the bolt insertion holes 3c and 7b to the screw holes 24. It is only necessary to use the required number of bolts 25 and 26 in terms of strength, and the bolt insertion holes 2c, 3c, 6b, and 7b and the screw holes 23 and 24 may be provided in the number corresponding to the number of the bolts 25 and 26.

Two fan-shaped sealed pressure chambers R are formed in the hollow part 21 by mounting the side plates 6 and 7 and the side panels 2 and 3 to the case 4 as described above while inserting them into the shaft 1. The two pressure chambers R are divided by the vane 5 provided on the shaft 1 into a space L1 and a space L2, respectively, and a fluid such as operating oil is sealed therein. The O-rings 27 and 28 surrounding the outer periphery of the hollow part 21 are attached to the upper and lower ends in Fig. 1 of the main body 20 of the case 4, and a space between the case 4 and the side plates 6 and 7 is sealed so that the pressure chambers R are sealed.

In Fig. 2, the space L1 is located on the right side of the vane 5 when seen from the axis of the shaft 1, while the space L2 is located on the left side of the vane 5 when seen from the axis of the shaft 1. When the shaft 1 is rotated clockwise in Fig. 2, each space L2 is enlarged by the vane 5, while each space L1 is contacted. On the contrary, if the shaft 1 is rotated counterclockwise in Fig. 2, each space L2 is contracted by the vane 5, while each space L1 is enlarged.

The spaces L1 whose capacities are both enlarged or contracted with the rotation of the shaft 1 are made to communicate with each other by the communication hole 8 of the shaft 1 and this is referred to as a first chamber R1. Similarly, the spaces L2 whose capacities are both enlarged or contracted with the rotation of the shaft 1 are made to communicate with each other by the communication hole 9 of the shaft 1 and this is referred to as a second chamber R2. The first chamber R1 and the second chamber R2 are divided by the vane 5 as can be understood from the above description. The opening position of the communication hole 8 is provided at the root of the vane 5 so that the first chambers R1 are kept in the communicating state by the communication hole 8 even if the shaft 1 is rotated. The opening position of the communication hole 9 is also provided at the root of the vane 5 so that the second chambers R2 are kept in the communicating state by the communication hole 9 even if the shaft 1 is rotated.

A damping passage 30 which makes the first chamber R1 and the second chamber R2 communicate with each other is provided from the main body 20 of the case 4 to the valve block 22. In the valve block 22, a damping valve 32 arranged in the middle of the damping passage 30 and giving resistance to a flow of operating oil while allowing only the flow of the operating oil from the first chamber R1 to the second chamber R2, a check valve 33 arranged in the damping passage 30, juxtaposed with the damping valve 32, and allowing only the flow of the operating oil from the second chamber R2 to the first chamber R1, a damping valve 34 arranged in the middle of the damping passage 30 and in series with the damping valve 32 and giving resistance to the flow of the operating oil while allowing only the flow of the operating oil from the second chamber R2 to the first chamber R1, a check valve 35 arranged in the damping passage 30, juxtaposed with the damping valve 34, and allowing only the flow of the operating oil from the first chamber R1 to the second chamber R2, and an accumulator 36 connected between the damping valve 32 and the damping valve 34 in the middle of the damping passage 30.

Therefore, if the shaft 1 is rotated clockwise and the vane 5 compresses the first chamber R1, the operating oil pushed out of the first chamber R1 passes through the damping valve 32 and the check valve 35 and moves to the enlarging second chamber R2 via the damping passage 30. When the damping valve 32 gives resistance to this flow of the operating oil, a differential pressure is generated between the first chamber R1 and the second chamber R2, and a damping force to suppress the rotation of the shaft 1 is exerted.

On the other hand, if the shaft 1 rotates counterclockwise and the vane 5 compresses the second chamber R2, the operating oil pushed out of the second chamber R2 passes through the damping valve 34 and the check valve 33 and moves to the enlarging first chamber R1 via the damping passage 30. When the damping valve 34 gives resistance to this flow of the operating oil, a differential pressure is generated between the second chamber R2 and the first chamber R1, and a damping force to suppress the rotation of the shaft 1 is exerted.

A U-shaped seal 29 is attached at a portion on the inner periphery of the main body 20 of the case 4 and in sliding contact with the outer periphery of the enlarged diameter part 1b of the shaft 1, Portions on the both end sides of the seal 29 extend to the side opposite to the vane 5 and seal a space between the main body 20 and the side plates 6 and 7. The first chamber R1 and the second chamber R2 are prevented from communicating with each other at portions other than the damping passage 30 by the seal 29, the seal 10 provided at the vane 5, the seal members 12 and 17 attached to the inner periphery of the side panels 2 and 3, and the O-rings 27 and 28.

Since the capacity of enlargement or contraction of the first chamber R1 by the rotation of the shaft 1 is equal to the capacity of contraction or enlargement of the second chamber R2 in the rotary damper D, it is not necessary to compensate for an in-cylinder capacity change as in a direct-motion piece rod type damper composed of a cylinder, a piston, and a piston rod, but a volume change of fluid caused by a temperature change or a volume change of the operating oil needs to be compensated here. Thus, the volume change caused by the temperature change of the operating oil is compensated by providing an accumulator 36. Moreover, the accumulator 36 acts a predetermined pressure to the sealed operating oil so as to improve apparent rigidity of the operating oil and to improve responsiveness to generation of the damping force.

In the rotary damper D constituted as above, since the side plates 6 and 7 more excellent in abrasion resistance than the side panels 2 and 3 are interposed between the vane 5 and the side panel 2 and 3, the vane 5 does not directly contact the side panels 2 and 3. Moreover, since the vane 5 is in sliding contact with the side plates 6 and 7 excellent in abrasion resistance, abrasion of the side panels 2 and 3 can be prevented even if an axial force (force in the axial direction) or a lateral force that inclines the shaft 1 acts on the shaft 1. Moreover, even if the vane 5 slides, abrasion on the surfaces of the side plates 6 and 7 is small, and the sliding surfaces of the side plates 6 and 7 can be prevented from becoming rough.

Since the sliding surfaces of the side plates 6 and 7 are prevented from becoming rough as described above, damage on the seal 10 in close contact with the sliding surface when the vane 5 swings is also suppressed, and deterioration in sealing performance can be also suppressed. As a result, leakage at the seal 10 does not occur, and the rotary damper D can exert an intended damping force. That is, the problem in which deterioration of the sealing performance of the seal 10 causes leakage and allows the first chamber R1 and the second chamber R2 to communicate with each other at portions other than the damping passage 30 and the intended damping force cannot be exerted can be solved. Therefore, even if the rotary damper D is used in the shaft 1 for an application of a suspension in a vehicle, deterioration of the seal 10 can be suppressed, and thus, the rotary damper D can exert the intended damping force for a long time and becomes most suitable for the application of a suspension in a vehicle.

Moreover, since the abrasion of the side panels 2 and 3 can be solved by interposing the side plates 6 and 7, a light-weighted material can be used for the side panels 2 and 3. Thus, as compared with the use of a material excellent in abrasion resistance for the side panels 2 and 3, a weight increase occurs only in the side plates 6 and 7, and the rotary damper D can be reduced in weight.

As described above, the rotary damper D can realize both weight reduction and suppression of sealing deterioration, and an intended damping force can be exerted for a long time even if it is used for the suspension application in which an axial force and a lateral force act on the shaft 1 other than the torque.

Moreover, a contact surface pressure of the vane 5 with the side plates 6 and 7 when the axial force or the lateral force acts on the shaft 1 can be controlled by setting the thickness of the vane 5 in the rotating direction and the length of the vane 5, and abrasion of the side plates 6 and 7 can be further suppressed by increasing the thickness and the length. However, since the abrasion resistance of the side plates 6 and 7 in this embodiment is high, the thickness of the vane 5 can be reduced while the abrasion of the side plates 6 and 7 is suppressed, and the length can also be reduced. By decreasing the thickness of the vane 5, an allowable rotation angle of the rotary damper D can be increased, and by reducing the length of the vane 5, the outer diameter of the rotary damper D can be reduced. Thus, contribution can be made to the size reduction of the rotary damper D.

The side plates 6 and 7 are interposed between the vane 5 and the side panels 2 and 3 in the above description, but if the axial force acting on the shaft 1 is always in one direction, for example, if the axial force acts only in the direction where the shaft 1 is directed upward in Fig. 1, it is also possible to interpose the side plate 6 only between the vane 5 and the side panel 2 and to omit the side plate 7 between the vane 5 and the side panel 3. If the axial force acts in the opposite direction, it is only necessary to omit the side plate 6 and to interpose only the side plate 7.

Moreover, the valve block 22 is provided in the case 4 and the damping valves 32 and 34 are provided in the valve block 22 in the above description, but it is also possible to omit the valve block by providing the damping passage, the check valve, and the damping valve in the vane 5 and by providing the accumulator in the shaft 1 and the like. If the damping characteristics (characteristics of the damping force with respect to the rotation speed of the shaft 1) do not have to be changed in the rotating direction of the shaft 1, the damping force may be exerted by one damping valve.

Furthermore, two vanes 5 are provided in the above description, but the number of installation may be one or three or more, and it is only necessary to install the vanes in the number appropriate for the specification of the rotary damper D. Moreover, the case 4 is formed of a single component in this embodiment, but it may be formed of a plurality of components.

The embodiment of the present invention has been described, but it is needless to say that the scope of the present invention is not limited by the details illustrated or described.

This application claims priority from Japanese Patent Application No. 2011-62320, filed March 22, 2011, which is incorporated herein by reference in its entirety.

### INDUSTRIAL APPLICABILITY

The present invention can be used for a rotary damper for various applications and can be used for a rotary damper used in a suspension of a vehicle, for example.

## Claims

1. A rotary damper (D) comprising:
a shaft (1);
a pair of side panels (2, 3) which pivotally support the shaft (1) while allowing the shaft (1) to rotate in a circumferential direction;
a case (4) which is provided between the pair of side panels (2, 3) and forms a pressure chamber (R) therein;
a vane (5) which is provided in the shaft (1), has a distal end in sliding contact with the inner periphery of the case (4) and divides the pressure chamber (R) into a first chamber (R1) and a second chamber (R2); and
a side plate (6, 7) which is interposed between the vane (5) and at least one of the side panels (2, 3) and is more excellent in abrasion resistance than the side panels (2, 3).
